# EUROPÄISCHE PATENTSCHRIFT

(11) **EP 1 836 865 B1**
(45) Veröffentlichungstag und Bekanntmachung des Hinweises auf die Patenterteilung: **05.03.2014**
(21) Anmeldenummer: 05707779.4
(22) Anmeldetag: 14.01.2005
(51) Int. Cl.: H04W 88/06, H04W 4/14

(54) **VERFAHREN UND SYSTEM ZUR DATENÜBERTRAGUNG BEI MOBILEN NETZWERKNODES**
METHOD AND SYSTEM FOR TRANSMITTING DATA IN MOBILE NETWORK NODES
PROCEDE ET SYSTEME DE TRANSMISSION DE DONNEES DANS DES NOEUDS DE RESEAU MOBILES

(43) Veröffentlichungstag der Anmeldung: 26.09.2007
(73) Patentinhaber: Swisscom AG, 3050 Bern (CH)
(72) Erfinder: DANZEISEN, Marc, CH-3063 Ittigen (CH); PERNY, Beat, CH-3213 Kleinbösingen (CH); LAGADEC, Roger, CH-8105 Regensdorf (CH); LINDER, Jan, CH-3013 Bern (CH)
(74) Vertreter: BOVARD AG
(86) Internationale Anmeldenummer: PCT/EP2005/050153
(87) Internationale Veröffentlichungsnummer: WO 2006/074827

(56) Entgegenhaltungen:
- EP-A- 1 492 364
- EP-A2- 1 318 687
- WO-A-03/039103
- US-A1- 2002 123 328

## Beschreibung

### Technisches Gebiet

Die vorliegende Erfindung betrifft ein Verfahren und ein System zur Datenübertragung bei mobilen Netzwerknodes. Die Erfindung betrifft insbesondere ein Verfahren und ein System zur Datenübertragung bei mobilen Netzwerknodes, welche mehrere Netzwerkschnittstellen mit entsprechendem Leistungsverbrauch umfassen.

### Stand der Technik

Der Bedarf der Datenübertragung zwischen Netzwerknodes sowie die zwischen Netzwerknodes übertragene Datenmenge nimmt nach wie vor mit einem hohen Wachstum zu. Das Wachstum basiert einerseits auf der steigenden Anzahl von Netzwerknodes wie beispielsweise fest installierten oder mobilen Computersystemen. Andererseits basiert das Wachstum auf immer grösseren Datenmengen wie insbesondere Multimediadaten. Solche Daten umfassen z.B. digitale Daten wie Texte, Graphiken, Bilder, Animationen, Tonaufnahmen oder Videoaufzeichnungen. Dazu gehören insbesondere auch Ton- und Videodaten wie beispielsweise gemäss den MPx (z.B. MP3) oder MPEGx (z.B. MPEG7) Standards, wie sie von der Moving Picture Experts Group (MPEG) definiert werden, oder von Bilddaten wie beispielsweise gemäss dem PNG Standard (PNG: Portable Network Graphics), welcher im RFC 2083 (RFC: Request for Comments) der IETF (Internet Engineering Task Force) definiert ist. So werden beispielsweise mittels einer digitalen Fotokamera zuerst Bilddaten von einem ersten Netzwerknode erfasst, dargestellt und allenfalls bearbeitet. Anschliessend werden diese Bilddaten oder Teile dieser Bilddaten über eine Kommunikationsverbindung an einen zweiten Netzwerknode übertragen, wobei die Bilddaten auf dem zweiten Netzwerknode abgespeichert, dargestellt und allenfalls weiterbearbeitet werden. Als Kommunikationsnetzwerke zur Übertragung von Daten werden z.B. ein LAN (Local Area Network), ein WAN (Wide Area Network) oder das Internet via z.B. einem öffentlichen, geschalteten Telefonnetzwerk (PSTN: Public Switched Telephone Network), via einem Mobilfunknetz (PLMN: Public Land Mobile Network) wie z.B. einem GSM- oder einem UMTS-Netz (GSM: Global System for Mobile Communication, UMTS: Universal Mobile Telephone System) oder via einem WLAN (Wireless Local Area Network) verwendet.

In den letzten Jahren ist auch die Mobilität und damit die Zahl von mobilen Netzwerkbenutzern ebenfalls stark gestiegen, insbesondere die Zahl der mobilen Internetbenutzer. Das wachsende Angebot an IP-fähigen (IP: Internet Protocol) mobilen Geräten, wie z.B. PDAs (PDA: Personal Digital Assistant), Mobilfunktelefonen oder Laptops, geht mit dieser Entwicklung Hand in Hand. Der Übergang von fixen Netzwerknodes zu flexibleren Anforderungen durch erhöhte Mobilität hat eben erst begonnen. In der Mobilfunktelefonie z.B. zeigt sich diese Tendenz u.a. auch an neuen Standards wie GPRS (General Packet Radio Services), EDGE (Enhanced Data GSM Environment), UMTS (Universal Mobile Telecommunications Service), HSDPA (High-Speed Downlink Packet Access) oder HSUPA (High-Speed Uplink Packet Access). Mobile Computerbenutzung unterscheidet sich in vielen Arten von Computerbenutzung und Netzwerkfähigkeit in Festnetzwerken. Für eine mobile Netzwerkbenutzung verfügt ein mobiler Netzwerknode heute meistens über unterschiedliche Netzwerkschnittstellen zur Verbindung des mobilen Netzwerknodes mit unterschiedlichen Kommunikationsnetzwerken. Die verschiedenen Netzwerkschnittstellen haben dabei auch unterschiedliche Leistungsmerkmale wie beispielsweise unterschiedliche Datenübertragungsraten, Bitfehlerraten, Verfügbarkeiten oder einen unterschiedlichen Energieverbrauch. So zeichnet sich beispielsweise ein GSM basiertes Mobilfunknetz insbesondere durch eine hohe, standortunabhängige Verfügbarkeit aus, wobei die Netzwerkschnittstelle zur Verbindung mit einem GSM basierten Mobilfunknetz eine relativ geringe Datenübertragungsrate und einen relativ geringen Energieverbrauch aufweist. Demgegenüber ist die Verbindung über eine WLAN Netzwerkschnittstelle nur an Standorten mit entsprechenden WLAN Access Points möglich, wobei die WLAN Netzwerkschnittstelle eine relativ hohe Datenübertragungsrate und einen relativ hohen Energieverbrauch aufweist. Schliesslich zeichnet sich beispielsweise ein UMTS Netzwerk durch eine mehr und mehr standortunabhängige Verfügbarkeit aus, wobei die UMTS Netzwerkschnittstelle eine relativ hohe Datenübertragungsrate und einen relativ hohen Energieverbrauch aufweist. Die verfügbaren Netzwerkschnittstellen eines Netzwerknodes sind oft unabhängig von einer eigentlichen Datenübertragung gleichzeitig aktiviert. Dies führt jedoch zu einem erhöhten Energieverbrauch, welcher insbesondere für Standorte ohne Stromsteckdose für die Energieversorgung des mobilen Netzwerknodes unerwünscht ist. Zwar verfügen die mobilen Netzwerknodes normalerweise über Mittel, um eine Netzwerkschnittstelle manuell oder automatisch, beispielsweise falls ein Überwachungsmodul detektiert, dass eine Netzwerkschnittstelle während einem bestimmten Zeitintervall unbenutzt blieb, abzuschalten. Eine manuelle Abschaltung hat den Nachteil, dass der Benutzer die Netzwerkschnittstelle vor einer Datenübertragung auch wieder manuell aktivieren muss. Für eine automatisierte Datenübertragung, wie beispielsweise für den automatisierten Download von E-Mail-Meldungen durch einen E-Mail-Client des mobilen Netzwerknodes, ist es jedoch schwierig, eine entsprechende Netzwerkschnittstelle zu den richtigen Zeitpunkten manuell zu aktivieren und gegebenenfalls wieder zu deaktivieren. Demgegenüber wird bei einer automatischen Abschaltung einer Netzwerkschnittstelle diese Netzwerkschnittstelle typischerweise auch wieder automatisch aktiviert, sobald eine Applikation des Netzwerknodes versucht, auf ein Netzwerk oder einen zweiten Netzwerknode zuzugreifen. Dies hat jedoch den Nachteil, dass die Netzwerkschnittstelle bei einem Zugriff einer Applikation des Netzwerknodes auf eine Zentraleinheit unnötig oft aktiviert wird, wie beispielsweise beim Zugriff auf einen E-Mail-Server durch einen E-Mail-Client des mobilen Netzwerknodes zur Kontrolle des Status des E-Mail-Kontos. Ein weiterer Nachteil des Standes der Technik ist es, dass eine deaktivierte Netzwerkschnittstelle, welche beispielsweise für den Empfang von Daten konfiguriert ist, welche eine hohe Datenübertragungsrate erfordern, von einem zweiten Netzwerknode nicht mehr zugreifbar ist. So ist es beispielsweise für eine Videotelephonie-Applikation eines zweiten Netzwerknodes nicht mehr möglich, einen Anruf auf einen mobilen Netzwerknode mit einer deaktivierten, jedoch für den Empfang eines Videotelephonieanrufs konfigurierten Netzwerkschnittstelle, zu bewerkstelligen.

Im Dokument WO-A-03/039103 werden ein Verfahren und eine Vorrichtung zur Verbindung eines Netzwerkdatengeräts mit einem Datennetzwerk beschrieben. Insbesondere wird in diesem Dokument ein drahtloser Datengerät mit einem drahtlosen Nachrichtenmodem und einem Datenmodem gezeigt. Dabei kann das Datenmodem kann sowohl in einem "low power state" (mit kleinem Stromverbrauch) und einem "high power state" (mit hohem Stromverbrauch) betrieben werden. Falls sich das Datenmodem im "low power state" befindet, dann kann das drahtlose Datengerät über das drahtlose Nachrichtenmodem Daten empfangen, durch welche dem drahtlosen Datengerät signalisiert werden kann, dass auf dem Netzwerk Daten verfügbar sind, welche über das Datenmodem übertragbar sind. Danach wird das Datenmodem aus dem "low power state" in den "high power state" gebracht, so dass die Datenübermittlung durchgführt werden kann. Allerdings ermöglicht die vorgeschlagene Lösung beispielsweise keine aktive Zustandsänderung des Datenmodems aus dem "high power state" in den "low power state".

Ein ähnliches Verfahren zur Übertragung einer Meldung an ein mobiles Endgerät wird im Dokument US-A-2002/0123328 beschrieben. Von einem E-Mail-Server wird über ein erstes Netzwerk (z.B. GSM) eine Alarmmeldung an das mobile Endgerät übertragen. Die Meldung wird anschliessend über ein zweites Netzwerk (z.B. GPRS) an das mobile Endgerät übertragen. Auch in diesem Fall fehlt eine Möglichkeit, wie die Kommunikationsschnittstelle des Endgeräts nach der Meidungsübertragung aktiv abgeschaltet, bzw. desaktiviert werden kann.

### Offenbarung der Erfindung

Es ist eine Aufgabe der vorliegenden Erfindung, ein neues Verfahren und ein neues System zur Datenübertragung bei mobilen Netzwerknodes vorzuschlagen, welche nicht die Nachteile des Standes der Technik aufweisen. Das neue Verfahren und das neue System sollen insbesondere die Datenübertragung bei mobilen Netzwerknodes mit mehreren Netzwerkschnittstellen mit entsprechendem Leistungsverbrauch verbessern.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur Datenübertragung bei einem mobilen Netzwerknode, welcher über mindestens zwei Netzwerkschnittstellen mit entsprechendem Leistungsverbrauch verfügt, eine Zentraleinheit für den Empfang von für den Netzwerknode bestimmten Daten konfiguriert wird, wobei eine erste Netzwerkschnittstelle des mobilen Netzwerknodes deaktiviert wird, wobei, falls die Zentraleinheit Daten empfängt, welche für den mobilen Netzwerknode bestimmt sind, mittels eines Signalisierungsmoduls eine den empfangenen Daten zugeordnete Signalisierungsmeldung über eine zweite Netzwerkschnittstelle des mobilen Netzwerknodes an den mobilen Netzwerknode übertragen wird, wobei aufgrund der übertragenen Signalisierungsmeldung die erste Netzwerkschnittstelle des mobilen Netzwerknodes aktiviert wird, und wobei Daten, welche für den mobilen Netzwerknode bestimmt sind, über die erste Netzwerkschnittstelle auf den mobilen Netzwerknode übertragen werden, so dass nach der Aktivierung der ersten Netzwerkschnittstelle mittels eines Überwachungsmoduls die erste Netzwerkschnittstelle überwacht wird, wobei die erste Netzwerkschnittstelle deaktiviert wird, sobald durch das Überwachungsmodul bestimmbare Ereignisse detektiert werden, und so dass Daten welche für den mobilen Netzwerknode bestimmt sind, nach dem Empfang der Daten durch die Zentraleinheit auf der Zentraleinheit abgespeichert werden. Ein solches Verfahren hat auch den Vorteil, dass die für den mobilen Netzwerknode bestimmten Daten auch dann verfügbar bleiben, falls ein längeres Zeitintervall für die Aktivierung der ersten Netzwerkschnittstelle benötigt wird.

Ein solches Verfahren hat insbesondere den Vorteil, dass bei mobilen Netzwerknodes eine energieeffiziente Datenübertragung mit hoher Datenübertragungsrate ermöglicht wird, indem beispielsweise als zweite Netzwerkschnittstelle eine Netzwerkschnittstelle mit relativ geringem Leistungsverbrauch wie beispielsweise einer GSM Schnittstelle verwendbar ist und indem beispielsweise als erste Netzwerkschnittstelle eine Netzwerkschnittstelle mit relativ hoher Datenübertragungsrate wie beispielsweise eine UMTS Schnittstelle verwendbar ist und womit eine Datenübertragung beim mobilen Netzwerknode sowohl mit einer relativ hohen Datenübertragungsrate als auch mit einem relativ geringen Leistungsverbrauch durchführbar ist. Ausserdem ist die erste Netzwerkschnittstelle gemäss diesem Verfahren deaktivierbar und somit der Energieverbrauch auf dem mobilen Netzwerknode reduzierbar, sobald beispielsweise detektiert wird, dass kein der Netzwerkschnittstelle entsprechendes Kommunikationsnetzwerk verfügbar ist.

In einer Ausführungsvariante wird als Zentraleinheit ein E-Mail-Server für den Empfang von für den mobilen Netzwerknode bestimmten E-Mail-Meldungen konfiguriert. Ein solches Verfahren hat insbesondere den Vorteil, dass eine energieeffiziente Datenübertragung mit hoher Datenübertragungsrate ermöglicht wird, indem beispielsweise als erste Netzwerkschnittstelle eine Netzwerkschnittstelle mit einer relativ hohen Datenübertragungsrate und einem relativ hohen Leistungsverbrauch verwendbar ist und indem die erste Netzwerkschnittstelle mit dem relativ hohen Leistungsverbrauch erst dann aktiviert wird, wenn für den mobilen Netzwerknode bestimmte E-Mail-Meldungen verfügbar sind.

In einer weiteren Ausführungsvariante wird als Zentraleinheit ein Netzwerkvermittlungsmodul mit einer bestimmbaren IP Adresse für den Empfang von für den mobilen Netzwerknode bestimmten IP Paketen konfiguriert. Mittels des Netzwerkvermittlungsmoduls ist der Empfang von für den mobilen Netzwerknode bestimmten IP Paketen detektierbar, wobei das Netzwerkvermittlungsmodul bei einer Detektion solcher IP Pakete mittels des Signalisierungsmoduls die Übertragung einer entsprechenden Signalisierungsmeldung auslöst. Ein solches Verfahren hat insbesondere den Vorteil, dass eine energieeffiziente Datenübertragung mit hoher Datenübertragungsrate ermöglicht wird, indem beispielsweise als erste Netzwerkschnittstelle eine Netzwerkschnittstelle mit einer relativ hohen Datenübertragungsrate und einem relativ hohen Leistungsverbrauch verwendbar ist und indem die erste Netzwerkschnittstelle automatisiert aktivierbar ist, sobald auf dem Netzwerkvermittlungsmodul IP Pakete eintreffen, welche für den mobilen Netzwerknode bestimmt sind.

In einer weiteren Ausführungsvariante wird als die den empfangenen Daten zugeordnete Signalisierungsmeldung eine von einem USSD Server (USSD: Unstructured Supplementary Service Data) und/oder SMS Server (SMS: Short Message Service) erzeugte über eine ständig verfügbare GSM Schnittstelle des mobilen Netzwerknodes übertragbare USSD Meldung und/ oder SMS Meldung verwendet. Ein solches Verfahren hat insbesondere den Vorteil, dass als zweite Netzwerkschnittstelle eine Netzwerkschnittstelle mit einem relativ geringen Leistungsverbrauch und mit einer relativ hohen Verfügbarkeit verwendbar ist.

In einer weiteren Ausführungsvariante wird aufgrund der übertragenen Signalisierungsmeldung eine UMTS Netzwerkschnittstelle und/oder eine WLAN Netzwerkschnittstelle des mobilen Netzwerknodes aktiviert. Ein solches Verfahren hat insbesondere den Vorteil, dass Kommunikationsverbindungen einer hohen Datenübertragungsrate verwendbar sind, welche sowohl in Bezug auf die mobilen Netzwerknodes als auch in Bezug auf die Standorte, für welche solche Kommunikationsverbindungen zugreifbar sind, weit verbreitet sind.

In einer anderen Ausführungsvariante wird basierend auf Daten der Signalisierungsmeldung der mobile Netzwerknode aus einem Ruhemodus aktiviert. Ein solches Verfahren hat insbesondere den Vorteil, dass in einem Ruhemodus des mobilen Netzwerknodes nur die für den Empfang der Signalisierungsmeldung notwendigen Module des mobilen Netzwerknodes aktiviert sind und somit der Leistungsverbrauch des mobilen Netzwerknodes zusätzlich reduzierbar ist.

In einer weiteren Ausführungsvariante wird nach der Aktivierung der ersten Netzwerkschnittstelle mittels eines Überwachungsmoduls die Übertragung von Daten über die erste Netzwerkschnittstelle überwacht, wobei die erste Netzwerkschnittstelle deaktiviert wird, sobald durch das Überwachungsmodul detektiert wird, dass während einem bestimmbaren Zeitintervall keine Datenübertragung stattgefunden hat. Ein solches Verfahren hat insbesondere den Vorteil, dass, falls die Netzwerkschnittstelle während einem bestimmbaren Zeitintervall für keine Datenübertragung benutzt wird, die erste Netzwerkschnittstelle deaktivierbar ist und somit der Energieverbrauch noch weiter reduzierbar ist.

### Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figur illustriert:

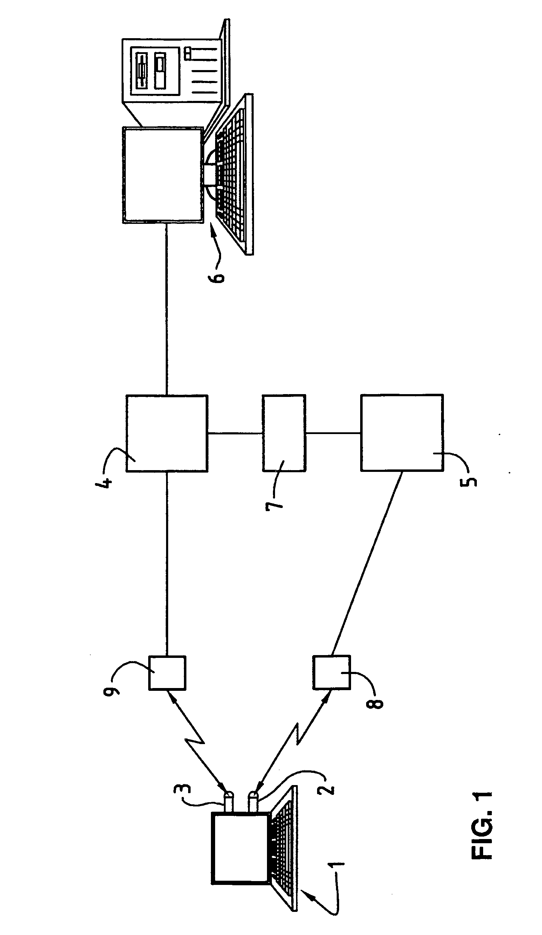

Figur 1 zeigt ein Blockdiagramm, welches schematisch ein System zur Datenübertragung bei mobilen Netzwerknodes darstellt.

### Ausführungsformen der Erfindung

In Figur 1 bezieht sich das Bezugszeichen 1 auf einen mobilen Netzwerknode wie beispielsweise einen tragbaren Personal Computer wie ein Laptop oder ein PDA (Personal Digital Assistant), ein Mobilfunktelefon oder auf irgendeinen anderen mobilen Netzwerknode. Der mobile Netzwerknode umfasst mehrere Netzwerkschnittstellen 2,3 wie beispielsweise eine Netzwerkschnittstelle gemäss dem GSM Standard, dem UMTS Standard, einem 802.xWLAN Standard wie einem 802.11, 802.15, 802.16, 802.20, etc. Standard oder dem Bluetooth Standard. Das erfindungsgemässe Verfahren ist insbesondere vorteilhaft bei der Verwendung eines mobilen Netzwerknodes an Standorten mit funkbasierten Kommunikationsnetzwerken wie beispielsweise Bahnhöfen, Flughäfen, Zügen, Taxis, Restaurants, Hotels oder irgendeinem anderen Standort mit einem Zugang zu einem funkbasierten Kommunikationsnetzwerk. Das erfindungsgemässe Verfahren bezieht sich jedoch auch auf die Verwendung eines mobilen Netzwerknodes an Standorten mit drahtbasierten Kommunikationsnetzwerken wie beispielsweise einem Ethernet Netzwerk, einem ADSL Zugang (ADSL: Asymmetric Digital Subscriber Line) oder irgendeinem anderen Zugang zu einem drahtbasierten Kommunikationsnetzwerk. Der Zugang vom mobilen Netzwerknode auf ein Kommunikationsnetzwerk erfolgt wahlweise über eine der Netzwerkschnittstellen 2,3 des mobilen Netzwerknodes. So umfassen moderne tragbare Personal Computer neben einem Modem für den Zugang zu Kommunikationsnetzwerken über ein PSTN (PSTN: Public Switched Telephone Network) heutzutage beispielsweise gleichzeitig auch Netzwerkschnittstellen gemäss dem Ethernet Standard, dem 802.x WLAN Standard, dem Bluetooth Standard oder dem IrDA Standard (IrDA: Infrared Data Association). Zudem lassen sich moderne tragbare Personal Computer mittels geeigneter Erweiterungskarten mit zusätzlichen Netzwerkschnittstellen für den Zugang zu weiteren Kommunikationsnetzwerken wie beispielsweise einem Mobilfunknetz gemäss dem GSM Standard, einem Mobilfunknetz gemäss dem UMTS Standard oder irgendeinem weiteren Kommunikationsnetzwerk ausrüsten. Das erfindungsgemässe Verfahren ist insbesondere vorteilhaft bei der Verwendung einer Erweiterungskarte, welche je eine Netzwerkschnittstelle für den Zugang zu einem Kommunikationsnetzwerk gemäss dem GSM Standard, gemäss dem UMTS Standard sowie gemäss dem 802.x WLAN Standard umfasst.

Die Netzwerkschnittstellen des mobilen Netzwerknodes zeichnen sich insbesondere durch unterschiedliche Leistungsmerkmale aus. So hat eine Netzwerkschnittstelle gemäss dem GSM Standard zwar einen geringen Leistungsverbrauch und eine hohe, standortunabhängige Verfügbarkeit. Eine Datenübertragung über eine Netzwerkschnittstelle gemäss dem GSM Standard erfolgt aber nur mit einer beschränkten Datenübertragungsrate. Falls nicht anders bezeichnet, bezieht sich im Folgenden die Netzwerkschnittstelle 2 auf eine Netzwerkschnittstelle für den Zugang auf ein Kommunikationsnetzwerk gemäss dem GSM Standard. Demgegenüber erzielt eine Netzwerkschnittstelle gemäss dem UMTS oder dem 802.x WLAN Standard für die Datenübertragung eine hohe Datenübertragungsrate. Eine Netzwerkschnittstelle gemäss dem UMTS oder dem 802.x WLAN Standard hat aber einen hohen Leistungsverbrauch und insbesondere für eine Netzwerkschnittstelle gemäss dem 802.x WLAN Standard nur eine beschränkte, standortabhängige Verfügbarkeit. Falls nicht anders bezeichnet, bezieht sich im Folgenden die Netzwerkschnittstelle 3 auf eine Netzwerkschnittstelle für den Zugang auf ein Kommunikationsnetzwerk gemäss dem UMTS Standard oder dem 802.x WLAN Standard.

In Figur 1 bezieht sich das Bezugszeichen 8 beispielsweise auf eine Basisstation eines Kommunikationsnetzwerks gemäss dem GSM Standard und das Bezugszeichen 9 bezieht sich beispielsweise auf eine Basisstation eines Kommunikationsnetzwerks gemäss dem UMTS Standard oder auf einen Access Point eines Kommunikationsnetzwerks gemäss dem 802.x WLAN Standard. In Figur 1 bezieht sich das Bezugszeichen 4 auf eine Zentraleinheit, welche für den Empfang von für den mobilen Netzwerknode 1 bestimmten Daten konfiguriert ist. Das Bezugszeichen 6 bezieht sich auf irgendeinen stationären oder mobilen Netzwerknode, welcher Daten an den mobilen Netzwerknode 1 übermittelt. Das Bezugszeichen 5 bezieht sich auf ein Signalisierungsmodul wie beispielsweise einen SMS Server oder einen USSD Server. Das Bezugszeichen 7 bezieht sich auf eine Schnittstelle zwischen der Zentraleinheit 4 und dem Signalisierungsmodul 5 zur Steuerung des Signalisierungsmoduls 5 durch die Zentraleinheit 4. Mit der Schnittstelle 7 wird insbesondere die Steuerung der Signalisierungseinheit 5 eines Kommunikationsnetzwerks gemäss dem GSM Standard durch eine Zentraleinheit 4 eines Kommunikationsnetzwerks gemäss dem IP Protokoll ermöglicht. Je nach Ausgestaltung ist die Schnittstelle 7 in die Signalisierungseinheit 5 oder in die Zentraleinheit 4 integrierbar.

In einer Ausführungsvariante bezieht sich die Zentraleinheit 4 auf einen E-Mail-Server. Der mobile Netzwerknode 1 umfasst einen E-Mail-Client welcher für den Empfang von für den E-Mail-Client bestimmte E-Mail-Meldungen konfiguriert ist. Die Konfiguration des E-Mail-Clients umfasst insbesondere den Hostnamen oder die IP Adresse des E-Mail-Servers. E-Mail-Clients werden oft so konfiguriert, dass diese zu bestimmbaren Zeitpunkten, beispielsweise nach Ablauf eines bestimmbaren Zeitintervalls, mittels einer Anfrage an den E-Mail-Server, wie beispielsweise einer Anfrage des POP Protokolls (POP: Post Office Protocol) oder des IMAP Protokolls (IMAP: Internet Message Access Protocol), den E-Mail-Server auf neue E-Mail-Meldungen überprüft. Somit ist es notwendig, dass beispielsweise über die Netzwerkschnittstelle 3 zwischen dem mobilen Netzwerknode 1 und der Zentraleinheit 4 IP Protokoll basierte Datenpakete ausgetauscht werden, wobei im Stand der Technik die Netzwerkschnittstelle 3 beispielsweise ständig aktiviert bleibt oder beispielsweise automatisch auch dann aktiviert wird, falls auf dem E-Mail-Server gar keine neuen E-Mail-Meldungen eingetroffen sind. Eine solche Verwendung der Netzwerkschnittstelle 3 führt jedoch zu einem unnötigen Energieverbrauch. Erfindungsgemäss wird auf dem E-Mail-Server beispielsweise eine E-Mail Adresse sowie die Adresse des mobilen Netzwerknodes 1, beispielsweise die Nummer einer GSM Schnittstelle des mobilen Netzwerknodes 1, abgespeichert, wobei anschliessend ein E-Mail Überwachungsmodul E-Mail-Meldungen, welche auf dem E-Mail-Server eintreffen, analysiert, beispielsweise durch die Analyse der To: Header Zeile von auf dem E-Mail-Server eingehenden E-Mail-Meldungen gemäss dem SMTP Protokoll (SMTP: Simple Mail Transfer Protocol), wobei dieses E-Mail Überwachungsmodul beim Eintreffen einer für den E-Mail-Client des mobilen Netzwerknodes 1 bestimmten E-Mail-Meldung mittels der abgespeicherten Adresse des mobilen Netzwerknodes 1 und mittels der Schnittstelle 7 eine entsprechende Signalisierungsmeldung an den mobilen Netzwerknode auslöst. Eine solche Konfiguration wird beispielsweise durch den Administrator des E-Mail-Servers oder, beispielsweise über eine geeignete Schnittstelle des E-Mail-Servers und ein geeignetes Konfigurationsmodul des mobilen Netzwerknodes, durch den mobilen Netzwerknode durchgeführt. Die erste Netzwerkschnittstelle 3 wird anschliessend deaktiviert, beispielsweise mittels eines Datenübertragungsüberwachungsmoduls des mobilen Netzwerknodes, wobei das Datenübertragungsüberwachungsmodul überprüft, ob die erste Netzwerkschnittstelle 3 für eine Datenübertragung benutzt wird, und wobei das Datenübertragungsüberwachungsmodul die erste Netzwerkschnittstelle 3 deaktiviert, sobald diese während einem bestimmbaren Zeitintervall für keine Datenübertragung benutzt wurde. Der Netzwerknode 6 sendet nun eine für den E-Mail-Client des mobilen Netzwerknodes 1 bestimmte E-Mail-Meldung an den E-Mail-Server. Sobald auf dem E-Mail-Server detektiert wird, dass eine für den E-Mail-Client des mobilen Netzwerknodes bestimmte E-Mail-Meldung empfangen wurde, wird durch das auf dem E-Mail-Server konfigurierte E-Mail Überwachungsmodul eine entsprechende Meldung, beispielsweise eine SNMP Meldung (SNMP: Simple Network Management Protocol), an die Schnittstelle 7 übermittelt. Die Schnittstelle 7 analysiert die SNMP Meldung und generiert eine Meldung zur entsprechenden Steuerung des Signalisierungsmoduls 5, beispielsweise eine Meldung gemäss dem SS7 Standard (SS7: Signalling System no 7). Das Signalisierungsmodul 5 übermittelt eine Signalisierungsmeldung, beispielsweise eine USSD Meldung oder eine SMS Meldung, über die Basisstation 8, beispielsweise eine Basisstation eines Kommunikationsnetzwerks gemäss dem GSM Standard, und die Netzwerkschnittstelle 2, beispielsweise eine Netzwerkschnittstelle für den Zugriff auf ein Kommunikationsnetzwerk gemäss dem GSM Standard, des mobilen Netzwerknodes an den mobilen Netzwerknode 1. Dabei ist die Signalisierungsmeldung über die Netzwerkschnittstelle 2 ständig oder quasi ständig, d.h. sobald die Netzwerkschnittstelle 2 bei einer Basisstation 8 registriert ist, übertragbar. Auf dem mobilen Netzwerknode ist ein Modul zur Auswertung der Signalisierungsmeldung sowie zur Steuerung der Netzwerkschnittstellen des mobilen Netzwerknodes gemäss der Signalisierungsmeldung konfiguriert. Die Signalisierungsmeldung ist wie beschrieben beispielsweise eine SMS Meldung und umfasst beispielsweise Daten zur Kennzeichnung des E-Mail-Clients des mobilen Netzwerknodes. Das Modul zur Auswertung der Signalisierungsmeldung verifiziert beispielsweise zuerst, ob der in der Signalisierungsmeldung spezifizierte E-Mail-Client auf dem mobilen Netzwerknode tatsächlich vorhanden ist, aktiviert anschliessend die Netzwerkschnittstelle 3 und fordert schlussendlich diesen E-Mail-Client des mobilen Netzwerknodes auf, auf den E-Mail-Server für den Empfang von für den E-Mail-Client bestimmten E-Mail-Meldungen zuzugreifen, wobei beispielsweise nach Beendigung dieses Zugriffs die Netzwerkschnittstelle 3 durch den E-Mail-Client deaktiviert wird.

Der Download einer E-Mail-Meldung kann stufenweise erfolgen. So können in einer ersten Stufe nur Headerinformationen und erst in einer zweiten Stufe der Inhalt der E-Mail-Meldung heruntergeladen werden. Der stufenweise Download ist ermöglicht eine weitere Reduktion des Energieverbrauchs und ist insbesondere auch bei der Verwendung von mehreren Netzwerkgeräten vorteilhaft. So kann die Signalisierungsmeldung beispielsweise an ein erstes Netzwerkgerät, beispielsweise an ein Mobilfunkendgerät mit einer ständig verfügbaren GSM Netzwerkschnittstelle, übermittelt werden. Ein Benutzer des Mobilfunkendgeräts kann aufgrund der Signalisierungsmeldung beispielsweise den Download von Headerinformationen, beispielsweise den Download der Subject: Zeile, auf das Mobilfunkendgerät anfordern, wobei der Download über die GSM Netzwerkschnittstelle des Mobilfunkendgeräts durchführbar ist. Anschliessend kann der Benutzer mittels des Mobilfunkendgeräts den Download des Inhalts der E-Mail-Meldung auf ein zweites Netzwerkgerät, beispielsweise auf einen Laptop mit einer deaktivierten WLAN Schnittstelle, veranlassen, beispielsweise mittels einer entsprechenden Meldung welche über eine Schnittstelle, beispielsweise eine Bluetooth-Schnittstelle, zwischen dem Mobilfunkendgerät und dem Laptop übermittelt wird.

In einer anderen Ausführungsvariante bezieht sich die Zentraleinheit 4 auf ein Netzwerkvermittlungsmodul mit einer ständig ansprechbaren öffentlichen IP Adresse. Das Netzwerkvermittlungsmodul wirkt dabei als Vermittlungseinheit zwischen der öffentlichen IP Adresse und der Netzwerkschnittstelle 3. Falls die Netzwerkschnittstelle 3 aktiviert ist, dann wirkt das Netzwerkvermittlungsmodul beispielsweise wie ein NAT Gerät (NAT: Network Address Translation), wobei von der öffentlichen IP Adresse empfangene IP Datenpakete beispielsweise über eine Tunnelverbindung vom Netzwerkvermittlungsmodul an die Netzwerkschnittstelle 3 übermittelt werden, und wobei von der Netzwerkschnittstelle 3 gesendete IP Pakete beispielsweise über diese Tunnelverbindung an das Netzwerkvermittlungsmodul und an weitere Netzwerkknoten übertragen werden. Das Netzwerkvermittlungsmodul ist beispielsweise als Softwaremodul, beispielsweise als Java Softwaremodul eines Netzwerkservers, oder beispielsweise als Hardwaremodul mit geeignet verdrahteten Logikbausteinen implementiert, wobei das Netzwerkvermittlungsmodul sowohl Daten mit dem Internet als auch Daten mit der Basisstation 9 bzw. der Netzwerkschnittstelle 3 und der Schnittstelle 7 austauscht. Dabei erfolgt die Datenübertragung zwischen dem Netzwerkvermittlungsmodul und den genannten weiteren Schnittstellen beispielsweise basierend auf dem IP Protokoll. Die Konfiguration des Netzwerkvermittlungsmoduls erfolgt beispielsweise durch einen Administrator des Netzwerkservers oder aber auch über geeignete Schnittstellen durch den mobilen Netzwerknodes 1 und umfasst beispielsweise die Abspeicherung einer Adresse des mobilen Netzwerknodes 1, beispielsweise die Nummer einer GSM Netzwerkschnittstelle des mobilen Netzwerknodes 1. Die erste Netzwerkschnittstelle 3 wird deaktiviert, beispielsweise sobald mittels eines Datenübertragungsüberwachungsmoduls des mobilen Netzwerknodes 1 detektiert wird, dass die Netzwerkschnittstelle 3 während einem bestimmbaren Zeitintervall für keine Datenübertragung benutzt wurde. Sobald das Netzwerkvermittlungsmodul IP Pakete empfängt, welche an die öffentliche IP Adresse des Netzwerkvermittlungsmoduls adressiert sind, beispielsweise IP Pakete welche von einem Netzwerknodes 6 an die öffentliche IP Adresse des Netzwerkvermittlungsmoduls gesendet werden, wird durch das Netzwerkvermittlungsmodul eine Signalisierungsmeldung, beispielsweise eine SNMP Meldung, an die Schnittstelle 7 übermittelt. Die Schnittstelle 7 analysiert die Signalisierungsmeldung, beispielsweise die SNMP Meldung, und generiert eine Meldung zur entsprechenden Steuerung des Signalisierungsmoduls 5, beispielsweise eine Meldung gemäss dem SS7 Standard. Das Signalisierungsmodul 5 übermittelt eine Signalisierungsmeldung, beispielsweise eine USSD Meldung oder eine SMS Meldung, über die Basisstation 8, beispielsweise eine Basisstation eines Kommunikationsnetzwerks gemäss dem GSM Standard, und die Netzwerkschnittstelle 2, beispielsweise eine Netzwerkschnittstelle für den Zugriff auf ein Kommunikationsnetzwerk gemäss dem GSM Standard, des mobilen Netzwerknodes an den mobilen Netzwerknode. Die Signalisierungsmeldung umfasst beispielsweise die IP Adresse des Netzwerknodes 6 sowie eine Port Adresse, auf welche der Netzwerknode 6 Daten sendet. Ein Modul des mobilen Netzwerknodes 1 zur Auswertung der Signalisierungsmeldung verifiziert beispielsweise zuerst, dass auf dem mobilen Netzwerknode 1 eine geeignete Applikation für den Empfang der vom Netzwerknode 6 gesendete IP Pakete betriebsbereit ist oder startet gegebenenfalls eine solche geeignete Applikation, beispielsweise eine Videotelephonie Applikation, zuerst auf. Anschliessend aktiviert das Modul zur Auswertung der Signalisierungsmeldung die Netzwerkschnittstelle 3, eine Verbindung zwischen der Netzwerkschnittstelle 3 und dem Netzwerkvermittlungsmodul initiieren und das Netzwerkvermittlungsmodul für die Übermittlung von vom Netzwerknode 6 an die öffentliche IP Adresse des Neizwerkvermittlungsmoduls gesendete IP Datenpakete konfigurieren. Das Netzwerkvermittlungsmodul kann insbesondere auch einen Home Agent gemäss dem Mobile IP Standard (IETF RFC 2002, Okt. 1996 und RFC 3220, Jan. 2002, IETF: Internet Engineering Task Force, RFC: Request for Comments) umfassen. Beispielsweise nach dem Ernfang einer entsprechenden Signalisierungsmeldung wird die Netzwerkschnittstelle 3 des mobilen Netzwerknodes mit einer IP Adresse konfiguriert, beispielsweise mit einer IP Adresse eines WLAN Netzwerks, und entsprechend dem Mobile IP Standard als Care-of Adresse an den Home Agent übertragen.

Für das erfindungsgemässe Verfahren ist zwischen der Zentraleinheit 4 und dem Netzwerknode 6 keine explizite Kommunikation, wie beispielsweise eine Statusanfrage bezüglich des mobilen Netzwerknodes 1, zur Durchführung des Verfahrens zur Datenübertragung zwischen dem Netzwerknode 6 und dem mobilen Netzwerknode 1 erforderlich, d.h. das erfindungsgemässe Verfahren ist für den Netzwerknode 6 vollkommen transparent. In einer Ausführungsvariante umfasst das erfindungsgemässe Verfahren eine explizite Kommunikation, d.h. der Netzwerknode 6 umfasst beispielsweise ein Softwaremodul zur expliziten Auslösung einer Signalisierungsmeldung zur Aktivierung einer Netzwerkschnittstelle 3 des mobilen Netzwerknodes 1 sowie beispielsweise auch zur Durchführung einer Datenübertragung über die aktivierte Netzwerkschnittstelle 3.

Es ist wichtig festzustellen, dass die Netzwerkschnittstellen 2,3 des mobilen Netzwerknodes 1 beispielsweise in einer einzigen Netzwerkkarte gemäss dem so genannten PC Card Standard zu integrieren. Module des mobilen Netzwerknodes zur Durchführung des erfindungsgemässen Verfahrens oder zur Realisierung des erfindungsgemässen Systems sind beispielsweise auch in dieser Netzwerkkarte, beispielsweise als Softwaremodule, als Firmwaremodule oder als Hardwaremodule, integriert. Somit lässt sich der mobile Netzwerknode, beispielsweise ein Laptop Computer, in einen Ruhemodus versetzen, wobei nur die Netzwerkkarte durch die Batterie des mobilen Netzwerknodes mit Energie versorgt wird, und wobei beispielsweise nur eine GSM Netzwerkschnittstelle 2 der Netzwerkkarte und das Modul zur Auswertung von Signalisierungsmeldungen aktiviert bleiben. Somit ist der mobile Netzwerknode beispielsweise über eine APM Schnittstelle (APM: Advanced Power Management) aktivierbar, sobald eine entsprechende Signalisierungsmeldung von der Netzwerkschnittstelle 2 empfangen wird. Mit einem solchen Verfahren und System wird eine noch weitere Reduktion des Energieverbrauchs erzielt. Mit diesem Verfahren und System lassen sich auch bestimmbare Applikationen des mobilen Netzwerknodes in einen Ruhemodus versetzen, beispielsweise indem bestimmbare erste Applikationen in einen Ruhemodus versetzt werden und nur bestimmbare zweite Applikationen, beispielsweise ein E-Mail-Client oder eine Videotelephonieapplikation, aktiviert bleiben. Werden nur bestimmbare Applikationen des mobilen Netzwerknodes in einen Ruhemodus versetzt, dann sind insbesondere Anrufe auf eine Videotelephonieapplikation mit einer kleineren Antwortverzögerung beantwortbar.

Der Energieverbrauch einer Netzwerkschnittstelle des mobilen Netzwerknodes 1 kann durch ein zwischen das Betriebssystem, sowie die Applikationen, des mobilen Netzwerknodes 1 und die Netzwerkschnittstelle 3 geschaltetes Softwaremodul weiter optimiert werden, sodass das Betriebssystem oder Applikationen nicht direkt auf Netzwerkschnittstellen des mobilen Netzwerknodes zugreifen, sondern nur über das zwischengeschaltete Softwaremodul. Mittels eines solchen Softwaremoduls werden gemäss spezifizierbaren Filterregeln beispielsweise IP Pakete intelligent geroutet, dynamisch an verschiedene Netzwerkschnittstellen übermittelt oder unterdrückt. So kann beispielsweise ein Request zur Kontrolle des Status eines E-Mail Accounts über eine energiesparsame aber schmalbandige Netzwerkschnittstelle geführt werden, womit sichergestellt wird, dass eine Netzwerkschnittstelle mit einem energiesparsamen Standby Modus, wie beispielsweise eine UMTS Netzwerkschnittstelle, nicht unnötig aus dem Standby Modus in einen aktivierten Modus mit einem hohen Energieverbrauch gesetzt wird.

## Patentansprüche

1. Verfahren zur Datenübertragung bei mobilen Netzwerknodes, wobei ein mobiler Netzwerknode (1) mindestens zwei Netzwerkschnittstellen (2,3) mit Leistungsverbrauch umfasst, wobei in einer Zentraleinheit (4) eine dem mobilen Netzwerknode (1) zugeordnete Adresse abgespeichert wird, wobei eine erste Netzwerkschnittstelle (3) des mobilen Netzwerknodes (1) deaktiviert wird, wobei, falls die Zentraleinheit (4) Daten empfängt, welche für den mobilen Netzwerknode (1) bestimmt sind, mittels eines Signalisierungsmoduls (5) eine den empfangenen Daten zugeordnete Signalisierungsmeldung über eine zweite Netzwerkschnittstelle (2) des mobilen Netzwerknodes an den mobilen Netzwerknode (1) übertragen wird, wobei aufgrund der übertragenen Signalisierungsmeldung die erste Netzwerkschnittstelle (3) des mobilen Netzwerknodes aktiviert wird, und wobei Daten, welche für den mobilen Netzwerknode (1) bestimmt sind, über die erste Netzwerkschnittstelle (3) auf den mobilen Netzwerknode (1) übertragen werden,
**dadurch gekennzeichnet,**
**dass** nach der Aktivierung der ersten Netzwerkschnittstelle (3) mittels eines Überwachungsmoduls die erste Netzwerkschnittstelle überwacht wird, wobei die erste Netzwerkschnittstelle (3) deaktiviert wird, sobald durch das Überwachungsmodul bestimmbare Ereignisse detektiert werden, und
**dass** Daten, welche für den mobilen Netzwerknode (1) bestimmt sind, nach dem Empfang durch die Zentraleinheit (4) auf der Zentraleinheit (4) abgespeichert werden.

2. Verfahren nach Anspruch 1, **dadurch gekennzeichnet, dass** als Zentraleinheit (4) ein E-Mail-Server für den Empfang von für den mobilen Netzwerknode bestimmten E-Mail-Meldungen verwendet wird, wobei in der Zentraleinheit (4) eine E-Mail Adresse eines E-Mail-Clients des mobilen Netzwerknodes sowie eine Adresse des mobilen Netzwerknodes (1) abgespeichert wird.

3. Verfahren nach Anspruch 1, **dadurch gekennzeichnet, dass** als Zentraleinheit (4) ein Netzwerkvermittlungsmodul mit einer bestimmbaren IP Adresse für den Empfang von für den mobilen Netzwerknode (1) bestimmten IP Paketen verwendet wird, wobei im Netzwerkvermittlungsmodul eine Adresse des mobilen Netzwerknodes (1) abgespeichert wird.

4. Verfahren nach einem der Ansprüche 1 bis 3, **dadurch gekennzeichnet, dass** als die den empfangenen Daten zugeordnete Signalisierungsmeldung eine von einem USSD Server und/oder SMS Server erzeugte und über eine ständig verfügbare GSM Schnittstelle des mobilen Netzwerknodes (1) übertragbare USSD Meldung und/oder SMS Meldung verwendet wird.

5. Verfahren nach einem der Ansprüche 1 bis 4, **dadurch gekennzeichnet, dass** aufgrund der übertragenen Signalisierungsmeldung eine UMTS Netzwerkschnittstelle und/oder eine WLAN Netzwerkschnittstelle des mobilen Netzwerknodes (1) aktiviert wird.

6. Verfahren nach einem der Ansprüche 1 bis 5, **dadurch gekennzeichnet, dass** basierend auf Daten der Signalisierungsmeldung mindestens einem Softwaremodul des mobilen Netzwerknodes (1) die Aktivierung der ersten Netzwerkschnittstelle (3) signalisiert wird.

7. Verfahren nach einem der Ansprüche 1 bis 6, **dadurch gekennzeichnet, dass** basierend auf Daten der Signalisierungsmeldung der mobile Netzwerknode (1) aus einem Ruhemodus aktiviert wird.

8. Verfahren nach einem der Ansprüche 1 bis 7, **dadurch gekennzeichnet, dass** die erste Netzwerkschnittstelle (3) deaktiviert wird, sobald durch das Überwachungsmodul detektiert wird, dass während einem bestimmbaren Zeitintervall keine Datenübertragung über die Netzwerkschnittstelle (3) stattgefunden hat.

9. System zur Datenübertragung bei mobilen Netzwerknodes, wobei ein mobiler Netzwerknode (1) mindestens zwei Netzwerkschnittstellen (2,3) mit entsprechendem Leistungsverbrauch umfasst, und wobei das System umfasst:
- eine für den Empfang von für den mobilen Netzwerknode (1) bestimmten Daten konfigurierbare Zentraleinheit (4),
- Mittel zur Deaktivierung einer ersten Netzwerkschnittstelle (3) des mobilen Netzwerknodes (1),
- ein Signalisierungsmodul, wobei, falls die Zentraleinheit (4) Daten empfängt, welche für den mobilen Netzwerknode (1) bestimmt sind, mittels des Signalisierungsmoduls (5) eine den empfangenen Daten zugeordnete Signalisierungsmeldung über eine zweite Netzwerkschnittstelle (2) des mobilen Netzwerknodes an den mobilen Netzwerknode (1) übertragbar ist,
- Mittel zur Aktivierung der ersten Netzwerkschnittstelle (3) des mobilen Netzwerknodes (1) aufgrund der übertragenen Signalisierungsmeldung, und
- Mittel zur Datenübertragung über die erste Netzwerkschnittstelle (3) von Daten, welche für den mobilen Netzwerknode (1) bestimmt sind,
**dadurch gekennzeichnet,**
**dass** das System ein Überwachungsmodul umfasst, wobei mittels des Überwachungsmoduls nach der Aktivierung der ersten Netzwerkschnittstelle (3) die erste Netzwerkschnittstelle (3) überwachbar ist, und wobei die erste Netzwerkschnittstelle (3) deaktivierbar ist, sobald durch das Überwachungsmodul bestimmbare Ereignisse detektierbar sind, und
**dass** die Zentraleinheit (4) Mittel für die Abspeicherung von für den mobilen Netzwerknode (1) bestimmten Daten umfasst.

10. System nach Anspruch 9, **dadurch gekennzeichnet, dass** die Zentraleinheit (4) einen E-Mail-Server für den Empfang von für den mobilen Netzwerknode bestimmten E-Mail-Meldungen umfasst.

11. System nach Anspruch 9, **dadurch gekennzeichnet, dass** die Zentraleinheit (4) ein Netzwerkvermittlungsmodul mit einer bestimmbaren IP Adresse für den Empfang von für den mobilen Netzwerknode bestimmten IP Paketen umfasst.

12. System nach einem der Ansprüche 9 bis 11, **dadurch gekennzeichnet, dass** das Signalisierungsmodul (5) einen USSD Server und/oder einen SMS Server für die Übermittlung einer USSD Meldung und/oder einer SMS Meldung an eine ständig verfügbare GSM Schnittstelle des mobilen Netzwerknodes (1) umfasst.

13. System nach einem der Ansprüche 9 bis 12, **dadurch gekennzeichnet, dass** das System Mittel umfasst, um die Aktivierung der ersten Netzwerkschnittstelle (3) einem Softwaremodul des mobilen Netzwerknodes (1) zu signalisieren.

14. System nach einem der Ansprüche 9 bis 13, **dadurch gekennzeichnet, dass** das System Mittel umfasst, um den mobilen Netzwerknode (1) basierend auf Daten der Signalisierungsmeldung aus einem Ruhemodus zu aktivieren.

15. System nach einem der Ansprüche 9 bis 14, **dadurch gekennzeichnet, dass** mittels des Überwachungsmoduls die erste Netzwerkschnittstelle (3) deaktivierbar ist, sobald durch das Überwachungsmodul detektierbar ist, dass während einem bestimmbaren Zeitintervall keine Datenübertragung über die Netzwerkschnittstelle (3) stattgefunden hat.

## Claims

1. Method for data transmission with mobile network nodes, a mobile network node (1) comprising at least two network interfaces (2,3) with power consumption, an address assigned to the mobile network node (1) being stored in a central unit (4), a first network interface (3) of the mobile network node (1) being deactivated, if the central unit (4) receives data which are intended for the mobile network node (1), a signalling message assigned to the received data being transmitted to the mobile network node (1) by means of a signalling module (5) via a second network interface (2) of the mobile network node, based on the transmitted signalling message, the first network interface (3) of the mobile network node being activated, and data which are intended for the mobile network node (1) being transmitted to the mobile network node (1) via the first network interface (3),
**characterised**
**in that** after the activation of the first network interface (3) the first network interface is monitored by means of a monitoring module, the first network interface (3) being deactivated as soon as events definable by the monitoring module are detected, and
**in that** data which are intended for the mobile network node (1), are stored in the central unit (4) after receipt by the central unit (4).

2. Method according to claim 1, **characterised in that** used as the central unit (4) is an e-mail server for receiving e-mail messages intended for the mobile network node, an e-mail address of an e-mail client of the mobile network node as well as an address of the mobile network node (1) being stored in the central unit (4).

3. Method according to claim 1, **characterised in that** used as the central unit (4) is a network switching module with a definable IP address for receiving IP packets intended for the mobile network node (1), an address for the mobile network node (1) being stored in the network switching module.

4. Method according to one of the claims 1 to 3, **characterised in that** used as the signalling message assigned to the received data is a USSD message and/or SMS message generated by a USSD server and/or SMS server and transmittable via a constantly available GSM interface of the mobile network node (1).

5. Method according to one of the claims 1 to 4, **characterised in that** based on the transmitted signalling message a UMTS network interface and/or a WLAN network interface of the mobile network node (1) is activated.

6. Method according to one of the claims 1 to 5, **characterised in that** based on the data of the signalling message the activation of the first network interface (3) is signaled to at least one software module of the mobile network node (1).

7. Method according to one of the claims 1 to 6, **characterised in that** based on data of the signalling message, the mobile network node (1) is activated out of a rest mode.

8. The method according to one of the claims 1 to 7, **characterised in that** the first network interface (3) is deactivated as soon as it is detected by the monitoring module that during a definable time interval no data transmission has taken place via the network interface (3).

9. System for data transmission with mobile network nodes, a mobile network node (1) comprising at least two network interfaces (2,3) with power consumption, and the system comprising:
- a central unit (4) configurable for receiving data intended for the mobile network node (1),
- means for deactivating a first network interface (3) of the mobile network node (1),
- a signalling module, whereby, if the central unit (4) receives data which are intended for the mobile network node (1), a signalling message assigned to the received data is transmittable to the mobile network node (1), by means of the signalling module (5), via a second network interface (2) of the mobile network node,
- means for activating the first network interface (3) of the mobile network node (1) based on the transmitted signalling message, and
- means for data transmission via the first network interface (3) of data which are intended for the mobile network node (1),
**characterised**
**in that** the system comprises a monitoring module, the first network interface (3) being able to be monitored by means of the monitoring module after the activation of the first network interface (3), and the first network interface (3) being able to be deactivated as soon as events definable by the monitoring module are able to be detected, and
**in that** the central unit (4) comprises means for storing data intended for the mobile network node (1).

10. System according to claim 9, **characterised in that** the central unit (4) comprises an e-mail server for receiving e-mail messages intended for the mobile network node.

11. System according to claim 9, **characterised in that** the central unit (4) comprises a network switching module with a definable IP address for receiving IP packets intended for the mobile network node.

12. System according to one of the claims 9 to 11, **characterised in that** the signalling module (5) comprises a USSD server and/or an SMS server for transmitting a USSD message and/or an SMS message to a constantly available GSM interface of the mobile network node (1).

13. System according to one of the claims 9 to 12, **characterised in that** the system comprises means to signal to a software module of the mobile network node (1) the activation of the first network interface (3).

14. System according to one of the claims 9 to 13, **characterised in that** the system comprises means to activate the mobile network node (1) out of a rest mode based on data of the signalling message.

15. System according to one of the claims 9 to 14, **characterised in that** the first network interface (3) is able to be deactivated by means of the monitoring module as soon as it is able to be detected by the monitoring module that no data transmission via the network interface (3) has taken place during a definable time interval.

## Revendications

1. Procédé de transmission de données dans des noeuds de réseau mobiles, dans lequel un noeud de réseau mobile (1) comprend au moins deux interfaces de réseau (2, 3) avec une consommation d'énergie, dans lequel une adresse assignée au noeud de réseau mobile (1) est stockée dans une unité centrale (4), dans lequel une première interface de réseau (3) du noeud de réseau mobile est désactivée, dans lequel, si l'unité centrale (4) reçoit des données qui sont prévues pour le noeud de réseau mobile (1), un message de signalisation attribué aux données reçues est transmis au moyen d'un module de signalisation (5) au noeud de réseau (1) par une seconde interface de réseau (2) du noeud de réseau mobile, dans lequel la première interface de réseau (3) du noeud de réseau mobile est activée sur la base du message de signalisation transmis, et dans lequel des données qui sont destinées au noeud de réseau mobile (1) sont transmises au noeud de réseau mobile (1) par la première interface de réseau (3),
**caractérisé**
**en ce qu'**après l'activation de la première interface de réseau (3), la première interface de réseau est surveillée au moyen d'un module de surveillance, la première interface de réseau (3) étant désactivée dès que des événements définissables sont détectés par le module de surveillance, et
**en ce que** des données qui sont destinées au noeud de réseau (1) sont stockées dans l'unité centrale (4) après réception par l'unité centrale (4).

2. Procédé selon la revendication 1, **caractérisé en ce qu'**un serveur de courrier électronique est utilisé comme l'unité centrale (4) pour la réception de courriers électroniques destinés au noeud de réseau mobile, une adresse de courrier électronique d'un client de courrier électronique du noeud de réseau mobile ainsi qu'une adresse du noeud de réseau mobile (1) étant stockées dans l'unité centrale (4).

3. Procédé selon la revendication 1, **caractérisé en ce qu'**un module de commutation de réseau avec une adresse IP définissable est utilisé comme l'unité centrale (4) pour la réception de paquets IP destinés au noeud de réseau mobile (1), une adresse du noeud de réseau mobile (1) étant stockée dans le module de commutation de réseau.

4. Procédé selon l'une quelconque des revendications 1 à 3, **caractérisé en ce qu'**un message USSD et/ou message SMS généré par un serveur USSD et/ou un serveur SMS et transmis par une interface GSM constamment disponible du noeud de réseau mobile (1) est utilisé comme le message de signalisation attribué aux données reçues.

5. Procédé selon l'une quelconque des revendications 1 à 4, **caractérisé en ce qu'**une interface de réseau UMTS et/ou une interface de réseau WLAN du noeud de réseau mobile (1) est activée sur la base du message de signalisation transmis.

6. Procédé selon l'une quelconque des revendications 1 à 5, **caractérisé en ce que** l'activation de la première interface de réseau (3) est signalée à au moins un module de logiciel du noeud de réseau mobile (1) sur la base des données du message de signalisation.

7. Procédé selon l'une quelconque des revendications 1 à 6, **caractérisé en ce que** le noeud de réseau mobile (1) est activé depuis un mode de repos sur la base des données du message de signalisation.

8. Procédé selon l'une quelconque des revendications 1 à 7, **caractérisé en ce que** la première interface de réseau (3) est désactivée dès qu'il est détecté au moyen du module de surveillance qu'aucune transmission de données n'a eu lieu par l'interface de réseau (3) pendant un intervalle de temps définissable.

9. Système de transmission de données dans des noeuds de réseau mobiles, dans lequel un noeud de réseau mobile (1) comprend au moins deux interfaces de réseau (2, 3) avec une consommation d'énergie, et dans lequel le système comprend :
- une unité centrale (4) configurable pour réception des données destinées au noeud de réseau mobile (1),
- des moyens pour désactivation d'une première interface de réseau (3) du noeud de réseau mobile (1),
- un module de signalisation, au moyen duquel, si l'unité centrale (4) reçoit des données qui sont destinées au noeud de réseau mobile (1), un message de signalisation assigné aux données reçues est transmissible au noeud de réseau mobile (1) par une seconde interface de réseau (2) du noeud de réseau mobile,
- des moyens pour activation de la première interface de réseau (3) du noeud de réseau mobile (1) sur la base du message de signalisation transmis, et
- des moyens pour transmission de données par la première interface de réseau (3) de données qui sont destinées au noeud de réseau mobile (1),
**caractérisé**
**en ce que** le système comprend un module de surveillance, la première interface de réseau de communication (3) pouvant être surveillée au moyen du module de surveillance après l'activation de la première interface de réseau (3), et la première interface de réseau (3) pouvant être désactivée dès que des événements définissables sont détectables par le module de surveillance, et
**en ce que** l'unité centrale (4) comprend des moyens pour stocker des données destinées au noeud de réseau mobile (1).

10. Système selon la revendication 9, **caractérisé en ce que** l'unité centrale (4) comprend un serveur de courrier électronique pour la réception des courriers électroniques destinés au noeud de réseau mobile.

11. Système selon la revendication 9, **caractérisé en ce que** l'unité centrale (4) comprend un module de commutation de réseau avec une adresse IP définissable pour la réception des paquets IP destinés au noeud de réseau mobile.

12. Système selon l'une quelconque des revendications 9 à 11, **caractérisé en ce que** le module de signalisation (5) comprend un serveur USSD et/ou un serveur SMS pour la transmission d'un message USSD et/ou d'un message SMS à une interface GSM constamment disponible du noeud de réseau mobile (1).

13. Système selon l'une quelconque des revendications 9 à 12, **caractérisé en ce que** le système comprend des moyens pour signaler à un module logiciel du noeud de réseau mobile (1) l'activation de la première interface de réseau (3).

14. Système selon l'une quelconque des revendications 9 à 13, **caractérisé en ce que** le système comprend des moyens pour activer le noeud de réseau mobile (1) depuis un mode de repos sur la base des données du message de signalisation.

15. Système selon l'une quelconque des revendications 9 à 14, **caractérisé en ce que** la première interface de réseau (3) peut être désactivée au moyen du module de surveillance dès qu'il peut être détecté par le module de surveillance qu'aucune transmission de données par l'interface de réseau (3) n'a eu lieu pendant un intervalle de temps définissable.
